# EUROPEAN PATENT SPECIFICATION

(11) **EP 4 429 898 B1**
(45) Date of publication and mention of the grant of the patent: **02.07.2025**
(21) Application number: 22814005.9
(22) Date of filing: 07.11.2022
(51) Int. Cl.: B60B 3/16, B25B 13/48

(54) **CENTRE-LOCK WHEEL REMOVAL TOOL**
RADENTFERNUNGSWERKZEUG MIT MITTENVERRIEGELUNG
OUTIL DE RETRAIT DE ROUE À VERROUILLAGE CENTRAL

(30) Priority: 08.11.2021 GB 202116025
(43) Date of publication of application: 18.09.2024
(73) Proprietor: Gordon Murray Automotive Limited, Shalford, Surrey GU4 8EP (GB)
(72) Inventor: DRAKE, Mathew, Shalford, Surrey GU4 8EP (GB)
(74) Representative: Downing, Michael Philip
(86) International application number: PCT/EP2022/081006
(87) International publication number: WO 2023/079149

(56) References cited:
- DE-A1- 10 106 140
- DE-A1- 102018 007 072
- US-B2- 10 744 817
- US-B2- 10 946 693

## Description

### FIELD OF THE INVENTION

The present invention relates to a tool for removing centre-lock wheels (also known as center-lock wheels).

### BACKGROUND ART

The wheels of a vehicle need to be removable to allow for servicing and repair tasks to be carried out, especially in relation to the vehicle braking system, and for replacement of the vehicle tyres. Such replacement is necessary from time to time due to wear, or in order to substitute different tyres with different properties such as winter/summer tyres or road/track tyres. Most road cars and vans use a five- or four-bolt system in which the wheel hub has threaded sockets distributed evenly in a pentagonal or square pattern around the facing surface against which the wheel is held; a set of wheel bolts pass through corresponding apertures in the wheel and are secured in the sockets. In some vehicles, the hub is provided with externally-threaded studs onto which the wheel is fitted, and wheel nuts are fixed onto the studs in order to retain the wheel in place.

This is a straightforward and generally-reliable approach. However, it requires a reasonable radial distance from the centre of the wheel to be set aside for the fixing mechanism, which limits the potential dimensions of the brake discs. Centre-lock wheels have a long history in a motorsport context since they can be removed and attached more quickly during pit stops as only one fixing needs to be operated per wheel, they allow hub designs with more space for large brake discs, and have greater strength when properly installed. Some automobile manufacturers and tuners therefore install centre-lock wheel and hub systems on road-going sports and performance cars in order to secure these advantages. Centre-lock wheels are in current usage by manufacturers such as Porsche, Koenigsegg and Lamborghini.

Centre-lock wheels employ a single nut per wheel that has a threaded engagement with the wheel hub at the centre of the wheel. Whilst referred to as a 'nut', it may be externally-threaded for engagement with an internal thread provided on the wheel hub, but the morphology of the element in question usually leads to it being described as a 'nut' and this usage will be employed herein. The obviously-apparent difficulty with a centre-lock wheel is of course that the wheel itself is rotating around the same axis as that of the nut which is retaining the wheel in place, and therefore there is a risk that the rotational motion of the wheel will unwind the nut leading to loss of the wheel.

Such a loss would be catastrophic. Precautions are therefore taken to ensure that this does not take place. A simple and straightforward precaution is to arrange that rotation of the wheel in a forward direction will tend to tighten rather than loosen the nut. This requires that one side of the vehicle has a conventional clockwise-tightening thread and the other side has a reverse or anticlockwise thread. It is also common for the hub to have an interlocking engagement mechanism of some sort between the wheel and the hub so that torque is not transmitted directly via the nut. Older race cars used a spline on the axle over which the wheel fitted, engaging via a corresponding spline on the interior of the wheel. Current Porsche sports cars provide protruding lugs on the wheel hub which project into corresponding recesses on the wheel.

Principally, however, modern centre-lock arrangements for road vehicles employ an externally-splined locking pin which bridges the nut and hub and engages with an internal spline on both so as to prevent relative rotation. The locking pin may have a single spline matching both the hub and the nut, or it may have a step between two splines, one that fits the hub and one that fits the nut. This is inserted into position after the wheel has been fitted and the nut has been torqued, and prevents relative rotation. To remove the wheel, the locking pin must be extracted so that the nut can be removed.

Porsche employ a spring-loaded retracting locking pin that forms part of the wheel hub, which is depressed into the hub by a special protrusion on a bespoke socket that fits the centre-lock nut; removal of the socket from the nut allows the locking pin to extend under its spring bias until it is in place with its spline bridging the nut and the hub; a mechanic must visually check that it has extended satisfactorily. Other centre-lock arrangements employ a pin which is inserted from the outside through the nut and into the wheel hub along the centre-line of both, engaging with both sets of splines. It can then be held in by friction or by a snap-fit cap.

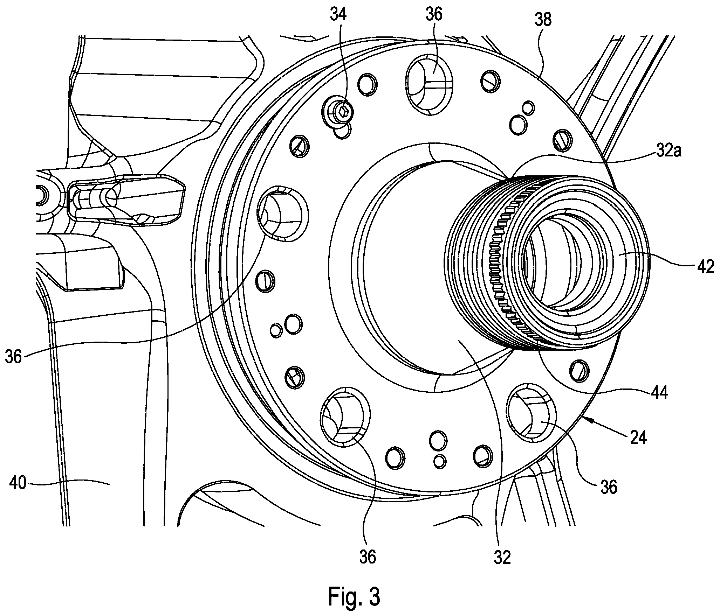

Such an externally-inserted pin will need to be removed prior to loosening the wheel nut. However, it is ideally a tight fit, so as to prevent accidental ejection, and there may have been a small movement of the nut relative to the wheel hub leading to the locking pin being even more tightly engaged. Thus, a removal tool is usually provided, comprising an adaptor which can be screwed into the locking pin and which provides an adequate securing point for a slide hammer to enable removal of the locking pin. Examples of known centre-lock wheel hub assemblies are available from DE 10 2018 007072 A1 and US 10 946 693 B2. In US 10 744 817 B2 the first end is provided with a polygonal section (see in fig. 3A-3D the extractor tool 300 for removal of the corresponding locking member 150, the tool having a first end 315, a second end 310 provided with an engagement element 311 for imparting rotational torque to the extraction tool, and a bearing surface, the shoulder in fig. 3D, located radially outside and axially displaced from the the first end section 315).

### SUMMARY OF THE INVENTION

A slide hammer is a very unsatisfactory way of removing the locking pin. It applies a shock load, which is inherently undesirable. It is physically large, noisy, heavy and requires significant physical exertion to operate. Furthermore, slide hammers cannot be easily transported, and cannot be included onboard the vehicle as they occupy too much space and impose too great a weight penalty. In some scenarios this could lead to a vehicle with a defective or damaged tyre requiring recovery to a specialist repairer, causing inconvenience to the end user where a roadside repair may have been possible.

The present invention therefore proposes to remove the locking element from a centre-lock wheel hub with a wheel nut threadingly engaged with the wheel hub, where the locking element engages with the wheel hub and with the wheel nut thereby to prevent relative rotation of the wheel hub and the wheel nut, by fitting an extraction apparatus having a first end with an externally threaded section, threadingly engaged with a corresponding internal thread of the locking element, a second end provided with an engagement element for imparting rotational torque to the extraction apparatus, and a bearing surface, located radially outside the externally threaded section and axially displaced from the externally threaded section, contacting the wheel nut.

Once this assembly has been completed by fitting the extraction apparatus to the locking element in the manner defined, the extraction apparatus can be rotated via the engagement element, thus drawing the locking element onto the threaded engagement. The extraction apparatus will be prevented from being drawn inwards as soon as the bearing surface comes into contact with the wheel nut. Thus, the locking element will be steadily withdrawn from the hub in a controlled manner.

The locking element typically comprises at least one spline corresponding to a spline on the wheel hub and/or the wheel nut. Often, there is a spline to engage with the wheel hub and a separate spline to engage with the wheel nut.

We prefer that the axial extent of the threaded engagement between the extraction tool and the locking element is at least as long as the axial extent of the engagement between the locking element and the wheel hub and/or the wheel nut. This ensures that the locking element can be completely removed.

The bearing face contacting the wheel nut can comprise an axially-concentric circular trench, into which an outer edge of the wheel nut is able to project. This provides a secure location for the bearing face. It is preferably located axially between the externally threaded section and the engagement element.

There will of course usually be a wheel mounted on the wheel hub, retained in place by at least the wheel nut.

Removal will be easier if the engagement element projects axially outwardly of the wheel nut; a wider variety of tools will then conveniently engage with the engagement element.

The extraction apparatus is preferably provided as two parts, an extraction tool on which the externally threaded section and the engagement element are provided, and a spacer tool on which the bearing surface is provided. The spacer tool can be an annular element of suitable dimensions.

The engagement element is preferably a recess having limited rotational symmetry, such as a square cross-section.

The present invention also relates to an extraction apparatus for a locking element of a centre-lock wheel hub assembly, having a first end with an externally threaded section, for engagement with a corresponding internal thread of the locking element, a second end provided with an engagement element for imparting rotational torque to the apparatus, a bearing surface for contacting the wheel nut, located radially outside the externally threaded section and axially displaced from the externally threaded section
Finally, the invention provides a method of removing a wheel from a centre-lock wheel hub assembly, the hub assembly comprising a wheel nut threadingly engaged with the wheel hub and a locking element engaging with the wheel hub and with the wheel nut thereby to prevent relative rotation of the wheel hub and the wheel nut, the method comprising the steps of providing an extraction tool that is threadingly engagable with the locking element, providing a spacer tool having a bearing face for contacting the wheel nut and a bearing face for contacting the extraction tool thereby to maintain a minimum axial distance between them, threadingly engaging the extraction tool with the locking element with the spacer tool positioned between the wheel nut and the extraction tool, rotating the extraction tool thereby to continue threading engagement with the locking element and hence relative axial translation of the locking element and the extraction tool.

### BRIEF DESCRIPTION OF THE DRAWINGS

An embodiment of the present invention will now be described by way of example, with reference to the accompanying figures in which;
Figure 1 shows the central area of a vehicle wheel with a centre-lock hub;
Figure 2 shows the centre-lock hub of figure 1 with the removal tool of the present invention fitted;
Figure 3 shows the centre-lock hub of figure 2 with all removal tools for the locking pin fitted;

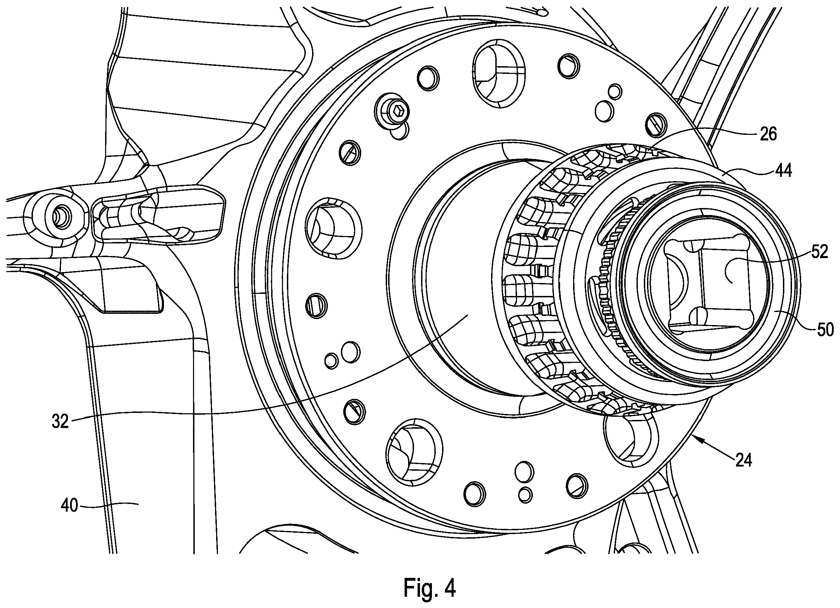

Figure 4 shows the wheel hub of figure 1 with the wheel nut absent, for illustrative purposes;
Figure 5 shows a sectional view through the wheel hub immediately prior to removal of the locking pin;
Figure 6 shows a sectional view through the wheel hub during removal of the locking pin; and
Figures 7, 8, 9 and 10 show iso, underside, side and sectional views (respectively) through the removal tool of the present invention.

### DETAILED DESCRIPTION OF THE EMBODIMENTS

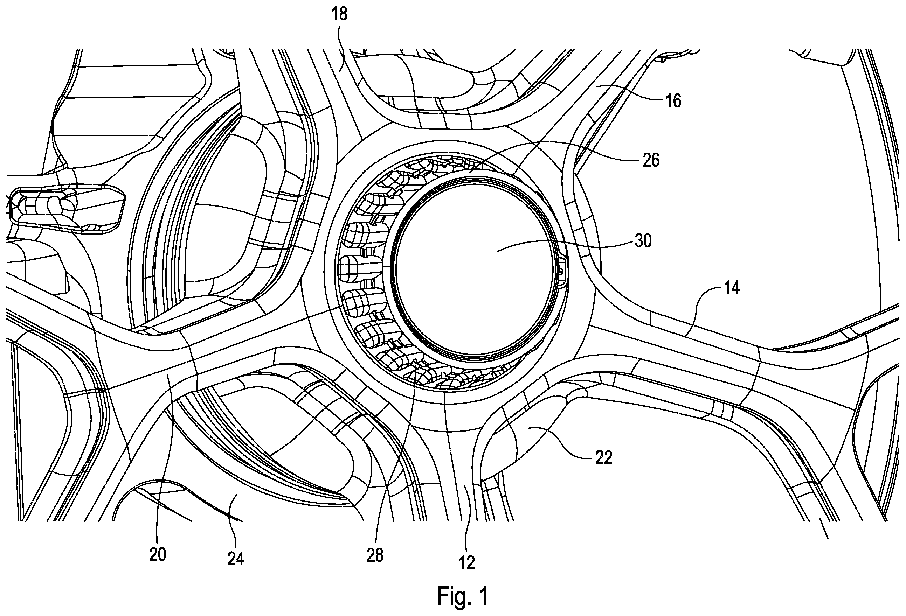

Figure 1 shows the central part of a vehicle wheel employing a centre-lock wheel nut. The wheel 10 has five spokes 12, 14, 16, 18, 20 which emanate from a central boss 22 which is fitted to a wheel hub assembly 24 which forms part of the vehicle. In the conventional manner, the hub assembly 24 may incorporate drive shafts to provide motive torque to the wheels, bearings to allow the rotating wheel 10 and hub 24 parts to be carried on the vehicle suspension, mounting points for brake components such as a brake disc, brake callipers and the like, and (usually on a front hub) attachment points for steering components allowing the hub 24 and wheel 10 to be rotated around a substantially (but usually not perfectly) vertical axis to allow the vehicle to be steered. The wheel 10 is retained in place on the hub 24 by a wheelnut 26 which engages with a stub axle (not visible in figure 1) on the wheel hub 24, to urge the boss 22 against the hub 24. The boss 22 is shaped to fit snugly around the stub axle so that the wheel is held securely in place, and the wheelnut 26 threadingly engages with the stub axle. The external circumference 28 of the wheelnut 26 is knurled to allow a suitably-shaped socket to engage with the wheelnut 26 and rotate it in order to remove it from the stub axle. The wheelnut 26 is hollow (with a cylindrical morphology) to reduce weight and allow insertion of the locking pin (to be described), and the hollow central part is covered in use with a trim element 30 in order to provide an aesthetically acceptable external appearance and to keep the internal parts of the wheel hub assembly clean during use of the vehicle.

This structure lends itself to a straightforward set of reference axes. In the following, an "axial" direction is one that is in line with the axis of rotation of the wheel 10 on the hub 24. The "in" and "out" directions along that axis are towards the centreline of the vehicle and away from the centreline of the vehicle, respectively.

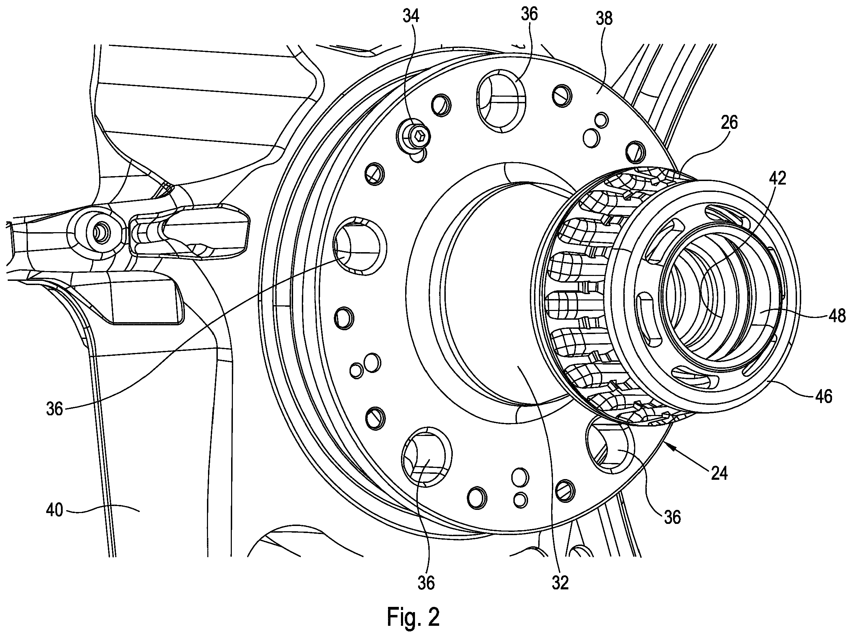

Figures 2 and 3 show the arrangement of figure 1 but with the wheel 10 absent (figure 2) and also the wheelnut 26 absent (Figure 3). This would obviously be an unusual arrangement in practice, with the wheelnut 26 fitted to the stub axle 32 on the hub 24 but without the wheel 10 being present. However, it is useful for illustrating the constructional details involved. Thus, the hub 24 can be seen to have a fixing point 34 for retaining a brake disc (also absent in figure 2) in place during wheel changes, and recesses 36 for receiving protrusions on the interior face of the wheel boss 22 which pass through corresponding apertures in the brake disc and extend into the recesses 36. In this way, relative rotation of the wheel 10, hub 24 and brake disc is prevented. These are provided on a rotatable part 38 of the hub 24 which is carried on bearings (not visible) within the remainder 40 of the hub assembly 24 that is attached to the vehicle suspension.

The stub axle 32 is in the form of a hollow cylindrical projection from the rotatable part 38 of the hub 24. An end portion of the stub axle is externally-threaded 32a so as to accept the wheelnut 26 which has a corresponding internal thread. Also visible in figures 2 & 3, normally concealed beneath the trim element 30, is the locking pin 42. This is an annular element which locates within the central hollow space of the stub axle 32 and which has external spline formations 44 which match corresponding internal spline formations on the stub axle 32 and the wheelnut 26. Thus, once inserted axially inwardly, the splines engage and the locking pin thus bridges from the stub axle 32 to the wheelnut 26 to prevent relative rotation and keep the wheelnut 26 engaged on the stub axle 32.

It then remains to find a way to remove the locking pin 42 when it becomes necessary to remove the wheel 10 (and hence the wheelnut 26). To enable this, we provide a spacer tool 46, shown in figure 2, in the form of an annular disc which sits axially on the wheelnut 26. On its inner face there is a bearing surface which contacts the wheelnut 26, shaped so as to minimise wear of the wheelnut 26. The annular disc shape of the spacer tool 46 defines a central hole 48, through which can extend an engagement tool 50. This has an external thread which can engage with a corresponding internal thread on the locking pin 42, and an externally-accessible engagement element 52 which (in this example) is a square-section recess able to receive standard-sized ratchet tools, breaker bars and the like. Engagement tools 50 of this type are commonly used to thread into the locking pin 42 in order to provide a secure attachment point for a slide hammer or the like which is able to forcibly remove the locking pin 42.

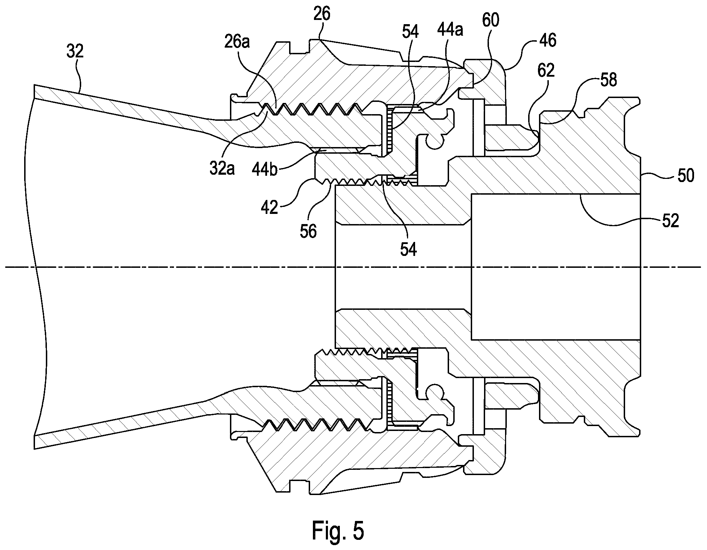

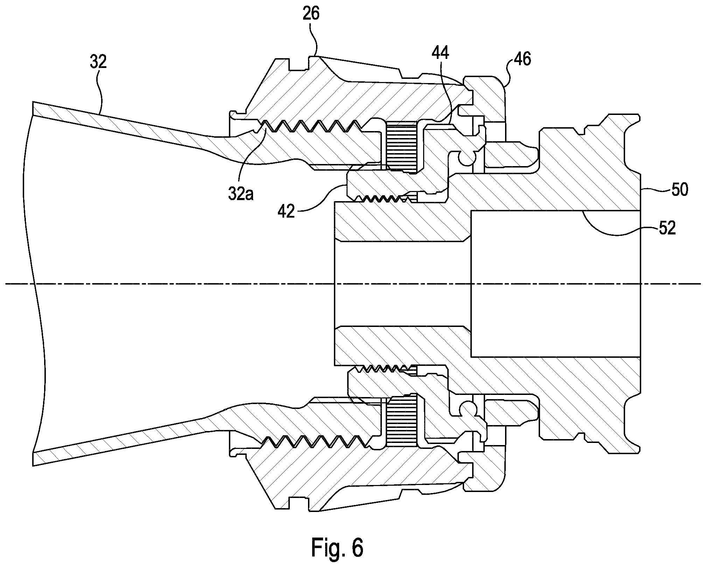

Instead of removing the locking pin 42 via a shock loading imparted via a slide hammer, figures 5 and 6 show how the locking pin 42 can be removed more easily and with less likelihood of damage. With the assembly shown in section at the point where extraction of the locking pin 42 is ready to commence, the wheelnut 26 is fitted on the stub axle 32, the internal thread 26a of the wheelnut 26 engaging tightly with the external thread 32a of the stub axle 32. The locking pin 42 is in place within the annular interior space defined by the hollow stub axle 32 and the wheelnut 26, external splines 44a and 44b engaging with corresponding internal splines on the stub axle 32 and wheelnut 26. Note that, in this example, the two splines 44a and 44b are different in size, with a step 54 between them, so that the spline 44b which engages with the stub axle 32 is narrower than the spline 44a which engages with the wheelnut 26. However, this need not necessarily be the case and other arrangements are possible which employ a single external spline on the locking pin which extends through matching internal splines on the stub axle and wheelnut.

The engagement tool 50 extends into the central axis of the locking pin 42 and has an external thread 54 which has just about engaged with an internal thread 56 on an inner cylindrical surface of the locking pin 42. Towards the outer part of the engagement tool 50, the tool widens including a step 58 which defines a bearing surface, behind with is sandwiched the spacer tool 46.

As noted above, the spacer tool 46 is in the form of a disc having an inner bearing surface 60 which contacts the outer extremity of the wheelnut 26 and an outer bearing surface 62 which contacts the step 58. With the thread 54 of the engagement tool 50 satisfactorily but not fully engaged, the spacer tool 46 is snugly sandwiched in place. To achieve this, the spacer tool is dimensioned appropriately in the light of the dimensions of the other elements illustrated in figure 5.

Once in this configuration, a source of torque can be connected to the engagement element 52 of the engagement tool 50, such as a ratchet spanner, breaker bar, air gun or the like. Rotation of the engagement tool 50 then further engages its thread 54 with the thread 56 of the locking pin 42. Since the engagement tool 50 cannot be drawn further into the assembly, due to the presence of the spacer tool 46 abutting against the wheelnut 26 and the step 58, the locking pin 42 must instead be withdrawn from the stub axle 32 and wheelnut 26. Figure 6 shows the arrangement after further rotation, with the locking pin 42 withdrawn sufficient to completely disengage the spline 44a with the wheelnut 26 and almost disengage the spline 44b with the stub axle 32. At this point, the locking pin 42 should be relatively free and easy to remove simply by pulling on the engagement tool 50.

Importantly, the locking pin 42 is removed in the way by a steady draw created by the threaded engagement with the engagement tool 50. The degree of leverage involved can be tailored as desired by setting pitch of the thread employed. Sudden shock loads are avoided entirely.

Another benefit of this invention is that a simple, inexpensive and lightweight spacer tool 46 can be provided that enables a standard engagement tool 50 to be employed within the process, simply by selecting the dimensions of the spacer tool as required in the light of the dimensions of a standard engagement tool 50 and the other elements of the wheel hub, nut etc. Such engagement tools are provided to workshops and recovery staff, and may be incorporated within the toolkit provided in the vehicle. The spacer tool is small enough and light enough to be provided in the vehicle toolkit and will therefore always be available should the vehicle become stranded with a damaged tyre, for example.

The spacer tool 46 could be provided in the manner shown, i.e. a separate disc which cooperates with the engagement tool 50. Alternatively, the spacer tool 46 could be retained on the engagement tool 50 as a permanent or semi-permanent part thereof. Such a combined spacer tool and engagement tool could be an integral body, or the spacer tool could be freely rotatable around the engagement tool. We generally prefer the latter, since this allows the spacer tool to remain still relative to the wheelnut and thus prevent wear or similar damage to the wheelnut.

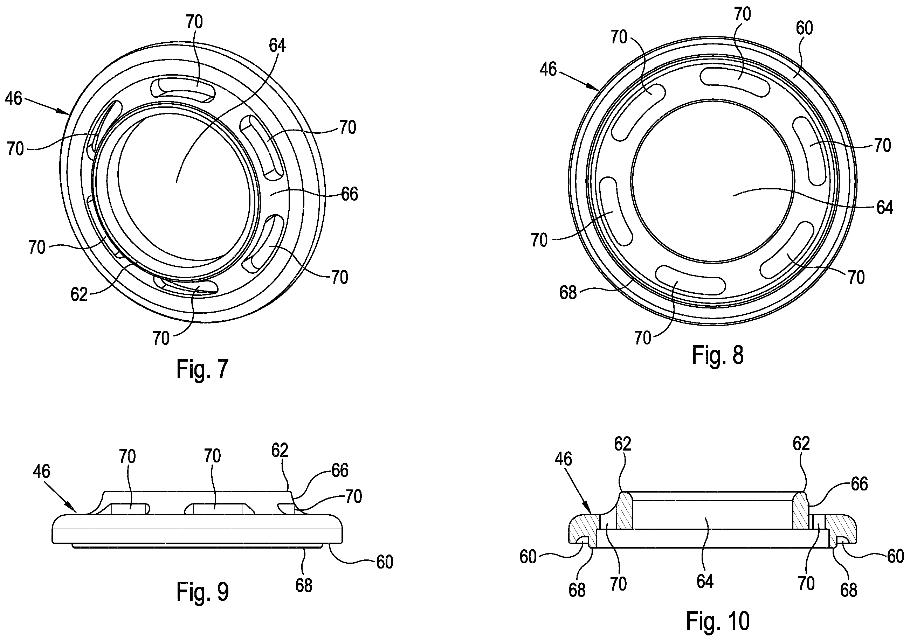

Figures 7 to 10 show the spacer tool 46 in greater detail. Generally in the form of an annular disc, the spacer tool 46 therefore has a central aperture 64 around which the profiled disc extends circumferentially. On its outermost or top face there is a protruding lip 66 immediately around the central aperture 64, the tip of which defines the outer bearing surface 62 against which the step 58 of the engagement tool 50 abuts in use in order to brace the engagement tool 50 against further inward movement. On the innermost face or underside of the spacer tool 46 there is an circumferential recess extending around the disc, proximate its radially outer edge. This defines the inner bearing surface 60 against which the outer extremity of the wheelnut 26 abuts in use in order to brace the spacer tool 46 against further inward movement.

The inner bearing surface 60 is defined in the form of a circumferential recess in order to allow the spacer tool 46 to rest snugly against the outermost tip of the wheelnut 26, with the spacer tool 46 locating itself accurately on the wheel hub axis when the tip of the wheelnut 26 fits into the circumferential recess. To assist with this positive location, the radially inner edge of the recess is defined by an upstanding ridge 68 extending circumferentially around the disc, which can (in use) fit snugly within the wheelnut 26.

The inner bearing surface 60 and outer bearing surface 62 are spaced apart axially by a distance which is small enough to allow the respective threads of the locking pin 42 and the engagement tool 50 to engage but large enough to allow the locking pin 42 to be fully withdrawn.

In the portion of the disc lying radially between the inner bearing surface 60 and the outer bearing surface 62, a plurality of weight-saving through-holes are provided. These are circumferentially spaced and sized to leave behind sufficient material to lend adequate strength to the spacer tool 46 while eliminating as much weight as possible. This assists with allowing the spacer tool 46 to be carried in the toolkit of a lightweight sports car.

It will of course be understood that many variations may be made to the above-described example without departing from the scope of the invention which is defined by the appended claims.

## Claims

1. An extraction apparatus (50)
for a locking element of a centre-lock wheel hub assembly, having;
a first end with an externally threaded section (54), for engagement with a corresponding internal thread (56) of the locking element;
a second end provided with an engagement element (52) for imparting rotational torque to the apparatus;
a bearing surface (58, 60, 62) for contacting the wheel nut, located radially outside the externally threaded section and axially displaced from the externally threaded section.

2. An extraction apparatus according to claim 1 in which the engagement element is a recess having limited rotational symmetry.

3. An extraction apparatus according to claim 2 in which the recess has a square cross-section.

4. An extraction apparatus according to any one of claims 1 to 3 in which the bearing surface (58, 60, 62) is located axially between the externally threaded section (54) and the engagement element (52).

5. An extraction apparatus according to any one of claims 1 to 4, provided as two parts being an extraction tool on which the externally threaded section is provided and the engagement element, and a spacer tool (46) on which the bearing surface is provided.

6. An assembly comprising:
a centre-lock wheel hub (24),
a wheel nut (26) threadingly engaged with the wheel hub,
a locking element (42) engaging with the wheel hub and with the wheel nut thereby to prevent relative rotation of the wheel hub and the wheel nut,
an extraction apparatus according to any one of the preceding claims in which;
the first end is threadingly engaged with a corresponding internal thread (56) of the locking element, and
the bearing surface is in contact with the wheel nut.

7. An assembly according to claim 6 in which the locking element comprises at least one spline (44a, 44b) corresponding to a spline on the wheel hub and/or the wheel nut.

8. An assembly according to any one of claims 6 or 7, in which the axial extent of the threaded engagement between the extraction apparatus and the locking element is at least as long as the axial extent of the engagement between the locking element and the wheel hub and/or the wheel nut.

9. An assembly according to any one of claims 6 to 8, wherein the bearing surface (60) contacting the wheel nut comprises an axially-concentric circular trench into which an outer edge of the wheel nut is able to project.

10. An assembly according to any one of claims 6 to 9, further comprising a wheel mounted on the wheel hub and retained in place by at least the wheel nut.

11. An assembly according to any one of claims 6 to 10, wherein the engagement element projects axially outwardly of the wheel nut to assist with removal.

12. An assembly according to claim 6 in which the spacer tool (46) is annular.

13. A method of removing a wheel from a centre-lock wheel hub assembly according to any one of claims 6 to 12,
the hub assembly comprising a wheel nut threadingly engaged with the wheel hub and a locking element engaging with the wheel hub and with the wheel nut thereby to prevent relative rotation of the wheel hub and the wheel nut,
the method comprising the steps of:
- providing an extraction tool that is threadingly engagable with the locking element,
- providing a spacer tool (46) having a bearing face (60) for contacting the wheel nut and a bearing face (62) for contacting the extraction tool thereby to maintain a minimum axial distance between them,
- threadingly engaging the extraction tool with the locking element with the spacer tool positioned between the wheel nut and the extraction tool,
- rotating the extraction tool thereby to continue threading engagement with the locking element and hence relative axial translation of the locking element and the extraction tool.

## Patentansprüche

1. Ausziehvorrichtung (50) für ein Verriegelungselement einer Mittenverriegelungsradnabenanordnung, umfassend:
ein erstes Ende mit einem Außengewindeabschnitt (54) zum Eingriff in ein entsprechendes Innengewinde (56) des Verriegelungselements;
ein zweites Ende mit einem Eingriffselement (52) zur Übertragung eines Drehmoments auf die Vorrichtung;
eine Lagerfläche (58, 60, 62) zum Kontaktieren der Radmutter, die radial außerhalb des Außengewindeabschnitts und axial versetzt zu dem Außengewindeabschnitt angeordnet ist.

2. Ausziehvorrichtung nach Anspruch 1, wobei das Eingriffselement eine Aussparung mit begrenzter Rotationssymmetrie ist.

3. Ausziehvorrichtung nach Anspruch 2, wobei die Aussparung einen quadratischen Querschnitt aufweist.

4. Ausziehvorrichtung nach einem der Ansprüche 1 bis 3, wobei die Lagerfläche (58, 60, 62) axial zwischen dem Außengewindeabschnitt (54) und dem Eingriffselement (52) angeordnet ist.

5. Ausziehvorrichtung nach einem der Ansprüche 1 bis 4, ausgebildet als zwei Teile, nämlich ein Ausziehwerkzeug, an dem der Außengewindeabschnitt und das Eingriffselement angeordnet sind, und ein Abstandshalterwerkzeug (46), an dem die Lagerfläche angeordnet ist.

6. Anordnung, umfassend:
eine Mittenverriegelungsradnabe (24),
eine Radmutter (26), die gewindeverbunden mit der Radnabe ist,
ein Verriegelungselement (42), das mit der Radnabe und der Radmutter in Eingriff steht, um eine relative Drehung zwischen Radnabe und Radmutter zu verhindern,
eine Ausziehvorrichtung nach einem der vorhergehenden Ansprüche, wobei:
das erste Ende gewindeverbunden mit einem entsprechenden Innengewinde (56) des Verriegelungselements ist, und
die Lagerfläche in Kontakt mit der Radmutter steht.

7. Anordnung nach Anspruch 6, wobei das Verriegelungselement mindestens eine Verzahnung (44a, 44b) aufweist, die einer Verzahnung an der Radnabe und/oder der Radmutter entspricht.

8. Anordnung nach einem der Ansprüche 6 oder 7, wobei die axiale Länge des Gewindeeingriffs zwischen der Ausziehvorrichtung und dem Verriegelungselement mindestens so groß wie die axiale Länge des Eingriffs zwischen dem Verriegelungselement und der Radnabe und/oder der Radmutter ist.

9. Anordnung nach einem der Ansprüche 6 bis 8, wobei die Lagerfläche (60), die mit der Radmutter in Kontakt steht, eine axial-konzentrische Kreisnut umfasst, in die eine Außenkante der Radmutter hineinragen kann.

10. Anordnung nach einem der Ansprüche 6 bis 9, ferner umfassend ein Rad, das auf der Radnabe montiert und mindestens durch die Radmutter gehalten ist.

11. Anordnung nach einem der Ansprüche 6 bis 10, wobei das Eingriffselement axial über die Radmutter hinausragt, um die Entfernung zu unterstützen.

12. Anordnung nach Anspruch 6, wobei das Abstandshalterwerkzeug (46) ringförmig ist.

13. Verfahren zum Entfernen eines Rades von einer Mittenverriegelungsradnabe nach einem der Ansprüche 6 bis 12,
wobei die Nabenanordnung eine Radmutter, die gewindeverbunden mit der Radnabe ist, und ein Verriegelungselement umfasst, das mit der Radnabe und der Radmutter in Eingriff steht, um eine relative Drehung zwischen Radnabe und Radmutter zu verhindern,
wobei das Verfahren folgende Schritte umfasst:
- Bereitstellen eines Ausziehwerkzeugs, das gewindeverbindbar mit dem Verriegelungselement ist,
- Bereitstellen eines Abstandshalterwerkzeugs (46) mit einer Lagerfläche (60) zum Kontaktieren der Radmutter und einer Lagerfläche (62) zum Kontaktieren des Ausziehwerkzeugs, um einen minimalen axialen Abstand zwischen diesen aufrechtzuerhalten,
- Gewindeverbinden des Ausziehwerkzeugs mit dem Verriegelungselement unter Positionierung des Abstandshalterwerkzeugs zwischen Radmutter und Ausziehwerkzeug,
- Drehen des Ausziehwerkzeugs, um den Gewindeeingriff mit dem Verriegelungselement fortzusetzen und dadurch eine relative axiale Verschiebung des Verriegelungselements und des Ausziehwerkzeugs zu bewirken.

## Revendications

1. Appareil d'extraction (50) pour un élément de verrouillage d'un ensemble à moyeu de roue à verrouillage central, ayant :
une première extrémité avec une section à filetage externe (54), pour la mise en prise avec un filet interne correspondant (56) de l'élément de verrouillage ;
une seconde extrémité pourvue d'un élément de mise en prise (52) pour transmettre un couple de rotation à l'appareil ;
une surface d'appui (58, 60, 62) pour entrer en contact avec l'écrou de roue, située radialement à l'extérieur de la section à filetage externe et déplacée axialement par rapport à la section à filetage externe.

2. Appareil d'extraction selon la revendication 1, dans lequel l'élément de mise en prise est un évidement ayant une symétrie de rotation limitée.

3. Appareil d'extraction selon la revendication 2, dans lequel l'évidement a une section transversale carrée.

4. Appareil d'extraction selon l'une quelconque des revendications 1 à 3, dans lequel la surface d'appui (58, 60, 62) est située axialement entre la section à filetage externe (54) et l'élément de mise en prise (52).

5. Appareil d'extraction selon l'une quelconque des revendications 1 à 4, prévu sous forme de deux pièces, à savoir un outil d'extraction sur lequel la section à filetage externe est prévue et l'élément de mise en prise, et un outil d'espacement (46) sur lequel la surface d'appui est prévue.

6. Ensemble, comprenant :
un moyeu de roue à verrouillage central (24),
un écrou de roue (26) mis en prise filetée avec le moyeu de roue,
un élément de verrouillage (42) se mettant en prise avec le moyeu de roue et avec l'écrou de roue pour ainsi empêcher la rotation relative du moyeu de roue et de l'écrou de roue,
un appareil d'extraction selon l'une quelconque des revendications précédentes, dans lequel :
la première extrémité est mise en prise filetée avec un filet interne correspondant (56) de l'élément de verrouillage, et
la surface d'appui est en contact avec l'écrou de roue.

7. Ensemble selon la revendication 6, dans lequel l'élément de verrouillage comprend au moins une cannelure (44a, 44b) correspondant à une cannelure sur le moyeu de roue et/ou l'écrou de roue.

8. Ensemble selon l'une quelconque des revendications 6 ou 7, dans lequel l'étendue axiale de la mise en prise filetée entre l'appareil d'extraction et l'élément de verrouillage est au moins aussi longue que l'étendue axiale de la mise en prise entre l'élément de verrouillage et le moyeu de roue et/ou l'écrou de roue.

9. Ensemble selon l'une quelconque des revendications 6 à 8, dans lequel la surface d'appui (60) entrant en contact avec l'écrou de roue comprend une tranchée circulaire axialement concentrique dans laquelle un bord extérieur de l'écrou de roue peut faire saillie.

10. Ensemble selon l'une quelconque des revendications 6 à 9, comprenant en outre une roue montée sur le moyeu de roue et retenue en place par au moins l'écrou de roue.

11. Ensemble selon l'une quelconque des revendications 6 à 10, dans lequel l'élément de mise en prise fait saillie axialement vers l'extérieur de l'écrou de roue pour aider l'enlèvement.

12. Ensemble selon la revendication 6, dans lequel l'outil d'espacement (46) est annulaire.

13. Procédé d'enlèvement d'une roue, d'un ensemble à moyeu de roue à verrouillage central selon l'une quelconque des revendications 6 à 12,
l'ensemble à moyeu comprenant un écrou de roue mis en prise filetée avec le moyeu de roue et un élément de verrouillage se mettant en prise avec le moyeu de roue et avec l'écrou de roue pour ainsi empêcher la rotation relative du moyeu de roue et de l'écrou de roue,
le procédé comprenant les étapes de :
- la fourniture d'un outil d'extraction qui peut être mis en prise filetée avec l'élément de verrouillage,
- la fourniture d'un outil d'espacement (46) ayant une face d'appui (60) pour entrer en contact avec l'écrou de roue et une face d'appui (62) pour entrer en contact avec l'outil d'extraction, pour ainsi maintenir une distance axiale minimum entre eux,
- la mise en prise filetée de l'outil d'extraction avec l'élément de verrouillage avec l'outil d'espacement positionné entre l'écrou de roue et l'outil d'extraction,
- la mise en rotation de l'outil d'extraction pour ainsi continuer la mise en prise filetée avec l'élément de verrouillage et donc la translation axiale relative de l'élément de verrouillage et de l'outil d'extraction.
